# EUROPEAN PATENT SPECIFICATION

(11) **EP 0 868 673 B1**
(45) Date of publication and mention of the grant of the patent: **01.08.2001**
(21) Application number: 96945616.9
(22) Date of filing: 23.12.1996
(51) Int. Cl.: G02B 6/42

(54) **RECEPTACLE FOR ELECTRO-OPTICAL DEVICE**
BEHALTER FUR EINE ELEKTROOPTISCHE VORRICHTUNG
DOUILLE POUR UN DISPOSITIF ELECTRO-OPTIQUE

(30) Priority: 22.12.1995 US 577740; 07.06.1996 US 660644; 13.06.1996 US 664039; 29.10.1996 US 29328 P
(43) Date of publication of application: 07.10.1998
(73) Proprietor: MINNESOTA MINING AND MANUFACTURING COMPANY, St. Paul, Minnesota 55133-3427 (US)
(72) Inventor: SELLI, Raman, K., Austin, TX 78726-9000 (US); DOSS, Donald, G., Austin, TX 78726-9000 (US); PARRETT, George, W., Austin, TX 78726-9000 (US); GUENTER, James, K., Austin, TX 78726-9000 (US); WALTRIP, Philip, W., Austin, TX 78726-9000 (US)
(74) Representative: Hilleringmann, Jochen, Dipl.-Ing.
(86) International application number: US9620240
(87) International publication number: WO9723797

(56) References cited:
- DE-A- 3 508 627
- DE-A- 4 008 483
- US-A- 4 135 783
- US-A- 4 756 591
- US-A- 5 348 487
- US-A- 5 392 373
- PATENT ABSTRACTS OF JAPAN vol. 004, no. 189 (E-039), 25 December 1980 & JP 55 132076 A (NIPPON TELEGR & TELEPH CORP), 14 October 1980,
- PATENT ABSTRACTS OF JAPAN vol. 007, no. 192 (P-218), 23 August 1983 & JP 58 090607 A (MITSUBISHI DENKI KK), 30 May 1983,

## Description

### 1. Field of the Invention

The present invention generally relates to devices for interconnecting optical fibers, and more particularly to a device for terminating at least one optical fiber used as a telecommunications line (voice, data, video, etc.) at an active optical device, such as a photodetector or solid-state light source.

Optical fibers have replaced copper wire as the preferred medium for carrying telecommunications signals. As with copper wire, it is necessary to provide for the interconnection of optical fibers, during installation, repair or replacement of the fibers, and to terminate the fibers onto active optical devices. Optical devices include, for example, optical sensors (photoelectric diodes) and light sources (LED's, laser diodes). The termination of an optical fiber may be indirect, i.e., the fiber may be connected to some other (passive) optical device such as a beam splitter or polarizer, before the light beam is directed to the active optical device. The present invention is generally directed to a receptacle for a termination of an optical fiber.

In the fiber optic connector described in U.S.-A-5,381,498, the connector has a plug and a receptacle, the plug having a fiber-receiving, V-shaped groove for each fiber to be interconnected, with the end of the fiber terminating in the middle of the groove. The receptacle has a plate which retracts as the plug is inserted, whereby another fiber is lowered into the V-groove of the plug. Upon full insertion of the plug, the two fibers ends are in contact, and the fiber secured to the receptacle is elastically deformed to maintain a continuous compressive load between the terminal ends of the fibers. The connector provides for the quick disconnection and reconnection of a plurality of optical fiber pairs, without the use of ferrules or other alignment members. High strength fiber may be used to withstand repeated insertions and bowing of the fibers. The exact lengths of fibers (i.e., the relative locations of their terminal ends in the plug and receptacle) are not critical since tolerance is provided by the slack taken up in the bowed receptacle fiber (the terminal portion of the fiber secured to the plug does not bow, but always remains straight). The ends of the fibers may be prepared by simply cleaving and boveling; the end faces may optionally be cleaved at an angle (i.e., non-orthogonal to the fiber axis) to reduce signal reflections.

Many fiber optic splices employ plate elements having fiber-receiving grooves, with means for clamping the terminal ends of the fibers in a common groove. Some of these devices are designed to interconnect a plurality of pairs of fibers, such as the splice shown in U.S-A-5,151,964. In U.S-A-4,028,162, fibers approach alignment grooves at a glancing angle and are held temporarily while a connector plate is adhered to the interconnected fibers. For other examples of techniques involving bowed fibers entering alignment grooves, see U.S-A-4,077,702, US-A-4,148,559 and US-A-5,080,461, and FR-A-2,660,442. Some of the connector designs using the principle of bowing a fiber into a fiber-alignment groove are rather complex and require many parts, such as the designs seen in U.S-A-4,045,121, US-A-4,218,113 and US-A-4,767,180. In U.S-A-4,322,127, an alignment plate holds a fiber in a groove of a mold while a cast is made about the fiber. The solidified plug can then be removed from the mold.

The connector of US-A-5,381,498 makes use of the fiber bowing principle, but suffers certain other disadvantages. For example, the plug design allows dust to easily settle on the tips of the fibers, since these tips are exposed above the fiber-receiving grooves. Fibers in the receptacle may similarly become contaminated since there is no door or other means to close off the opening when the plug is not present. While this known connector has fewer parts than most ferrule connectors, it would still be preferable to eliminate the moving parts, such as the sliding plate and spring inside the receptacle. That design also recommends the use of high-strength fibers in the socket making it less compatible with an embedded base of standard fiber. In US-A-5,381,498 as with several others above, it is not explained how the device might be used for termination.

From US-A-4, 135,783 a fixture for terminating an optical fiber in an optical device receptacle is known, wherein the fixture comprises a base and a projection attached to said base and having a fiber-receiving groove. The fiber-receiving groove is directed toward a fiber stop surface located on the base and including a light-transmitting material. Moreover, the know fixture is provided with means for aligning the base and, accordingly, the light-transmitting portion of the base with an optical device.

It is the object of the present invention to provide an optical fiber terminating fixture for an optical device-receptacle which similarly provides for the quick disconnection and retermination of one or more optical fibers, and which is simple to install and use, but further overcomes the foregoing limitations without sacrificing performance or cost.

According to the invention, this object is solved in that a fixture for terminating an optical fiber as defined in Claim 1 and a device for terminating an optical fiber as defined in Claim 10 are provided. The sub-claims refer to the subject-matter of preferred embodiments of the invention.

The present invention provides an optical fiber receptacle generally comprising (i) a termination fixture having a projection with a fiber-alignment groove formed in the projection, and a base attached to the projection, the base having a fiber stop, and (ii) means for aligning the termination fixture with an optical device. The aligning means comprises posts attached to the base and projecting therefrom for engaging with the optical device or a substrate carrying the optical device so as to be arranged above the optical device and to align said fiber stop surface with the optical device. The receptacle is advantageously used in conjunction with a plug having a hollow plug body with a distal end, the interior of the plug body having sufficient space to allow the terminal portion of a bare optical fiber to bow, and the distal end having a slot providing access to the terminal portion of the fiber. The receptacle has an opening sized to receive the distal end of the plug body, and the termination fixture is located to position the fiber-alignment groove to receive the terminal portion of the plug fiber as the plug body is inserted in the receptacle. When the plug is fully inserted in the receptacle, the plug fiber becomes bowed to maintain a continuous compressive load against the fiber stop. The bending of the plug fiber also maintains the fiber firmly nested in the fiber-alignment groove. Latch means are preferably provided for releasably securing the plug body in the receptacle. The plug may be biased in the interconnected position to be pushed back against the latch means to minimize the effect of manufacturing tolerances.

Various electro optical devices, such as photodetectors or solid-state light sources, can be positioned appropriately with respect to the termination fixture to operatively connect with the light-transmitting portion of the fixture base, i.e., with the terminal end of the fiber. The termination fixture may be mounted on a substrate which also bears the active device, the substrate being located within the receptacle. A larger receptacle with multiple openings may be provided to house a series of termination fixtures for simultaneous termination of a plurality of fibers. The active device receptacle thus shares many of the advantages of the connector such as ease of use and quick termination, disconnection, and re-termination. The termination fixture may further be designed to receive one of many different optical plates having, e.g., a lens thereon, to facilitate manufacturing and assembly.

The invention will best be understood by reference to the accompanying drawings, wherein:
Figure 1 is a longitudinal section of a fiber optic connector including a plug which is usable with the present invention;
Figure 2 is a perspective view of the plug and a fiber-to-fiber interconnection receptacle of Figure 1, with a partial section revealing the bowed fibers in the plug interior;
Figure 3 is a perspective view of one embodiment of a plug used with the present invention, with a sliding door,
Figure 4 is a perspective view of another embodiment of a plug used with the present invention, with the plug shroud omitted to reveal interior details;
Figure 5 is a perspective view of one embodiment of the fiber-to-fiber interconnection receptacle used with the plugs of Figures 1-4, with a hinged door having camming surfaces which cooperate with camming surfaces on the plug door;
Figure 6 is a perspective view of a termination fixture which may be used in the active device receptacle of the present invention;
Figure 7 is a longitudinal section of a termination using a plug and the termination fixture of Figure 6;
Figure 8 is a sectional view of a tool used to clean the tips of the fibers in a plug;
Figure 9 is a sectional view of a tool used to clean the tips of the fibers in a receptacle;
Figure 10 is a side elevational view of one embodiment of the active device receptacle of the present invention;
Figure 11 is a bottom perspective view of the active device receptacle of Figure 10;
Figure 12 is a perspective view showing two fiber optic termination fixtures and an optical plate used with one or more of the fixtures;
Figure 13 is a side elevational view of one optical plate; and
Figure 14 is a side elevational view of a termination fixture, such as in a series of such fixtures, mounted to a substrate for electrical interconnection.
Figure 15 shows modifications of the terminal fixture of the present invention.

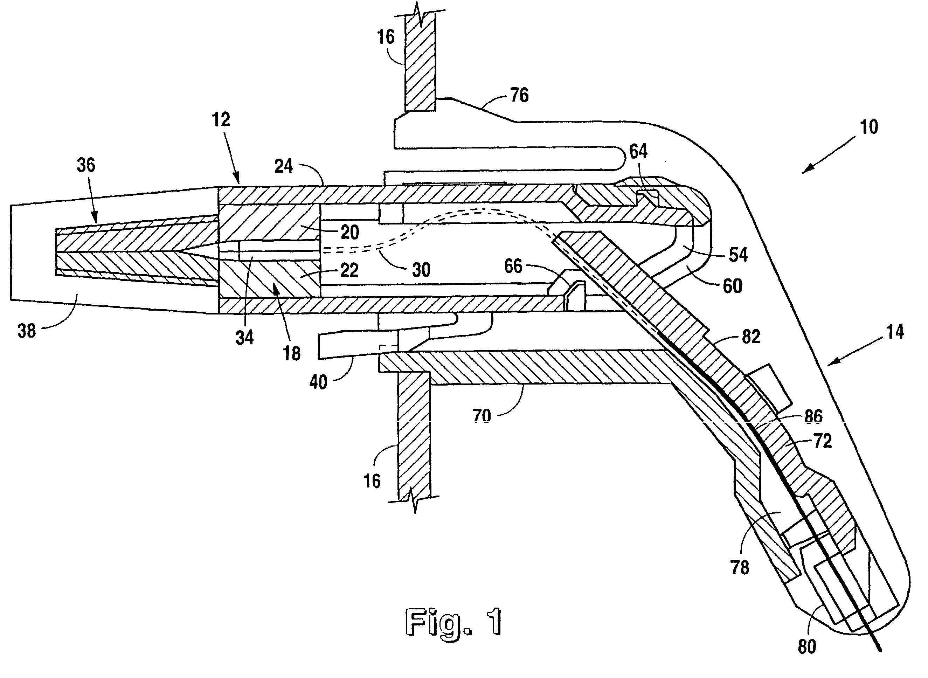

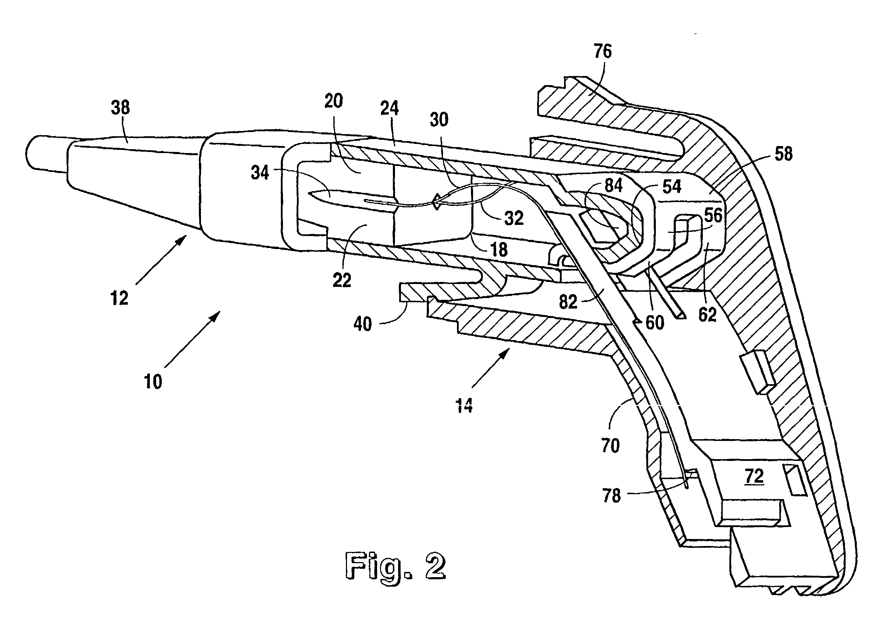

With reference now to the figures, and in particular with reference to Figures 1 and 2, there is depicted a fiber optic connector **10** having a plug **12** which is particularly useful in conjunction with the present invention (See U.S. -A-5,757,997). Connector **10** is designed for fiber-to-fiber interconnection, and is further generally comprised of a fiber-to-fiber interconnection receptacle **14.** Figure **1** is a longitudinal section of connector **10** showing plug **12** fully inserted in receptacle **14,** and receptacle **14** mounted on a support surface or bulkhead **16.** Figure **2** is a perspective view with bulkhead **16** omitted, also with a partial longitudinal section to illustrate the interior of the connector. The depicted embodiment provides for the interconnection of two pairs of fibers, but those skilled in the art will appreciate that the inventive concepts described herein extend to single pair interconnection as well as interconnection of a multiplicity of pairs.

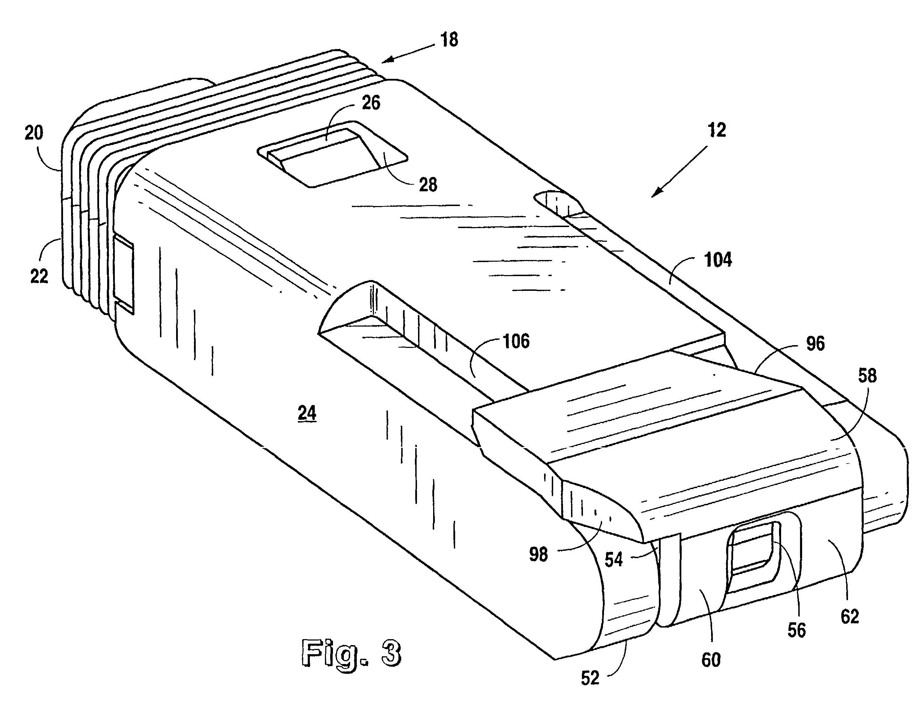

Plug **12,** shown also in Figure 3, includes a fiber holder **18** which may be constructed of two clamping elements or blocks **20** and **22,** and a plug body or shroud **24** which is attached to fiber holder **18.** Shroud **24** may be removably attached to plug fiber holder **18** by means of, e.g., latches **26** integrally molded onto blocks **20** and **22,** which engage cutouts **28** formed in corresponding walls of shroud **24.** Fibers **30** and **32** which are to be interconnected or terminated pass through holder **18** and into the hollow interior of shroud **24.** The terminal portions of the fibers are bare, that is, they are not affixed to any alignment member such as a ferrule. Shroud **24** therefore serves not only to assist in physically locating plug **12** in interconnection receptacle **14,** but also to provide protection for the otherwise exposed terminal portions of the fibers (the shroud could be made retractable to fully expose the fiber tips, if required). Holder **18** has fiber-receiving grooves **34** formed in the adjacent surfaces of blocks **20** and **22;** these two components may be identical parts. Holder **18** may secure the fibers, for example, by clamping, adhesives or both. Alternative means may be used to secure the fibers to holder **18.** Holder **18** may have an extension **36** surrounding the fibers for additional strain relief and clamping. A boot **38** may be provided for further strain relief and capturing of the strengthening members in the fiber cable (KEVLAR strands), and to assist in handling plug **12.** The strengthening members need not be crimped but they may be adhered onto the holder. Strain relief of the strengthening members is attained by a force fit of straightwall section of the plug fiber holder within the boot. This is dependent upon the choice of materials used for the boot and the plug fiber holder, and yields a design that does not require a crimp ring and which assists in ease of manufacture and reduces the number of needed components. Alternatively, an extension may be formed on the holder with a "torture" (irregular) path for clamping the strands and retaining the boot with an interference fit. One-way barbs on the surface of the plug fiber holder assist in the attachment of the boot to the plug fiber holder, which also assists in the attachment of the cable to the plug.

In the embodiment of Figures 1 and 2, a latch **40** is integrally molded onto one side of shroud **24** to releasably secure plug **12** to receptacle **14.** Latch **40** also imparts mechanical polarization to the plug, i.e., it can only be inserted into receptacle **14** in one orientation. Plug **12** may be biased in the interconnected position, e.g., by a springboard (a flexible cantilever) formed inside receptacle **14,** to be pushed back against latch **40** to minimize the effect of manufacturing tolerances.

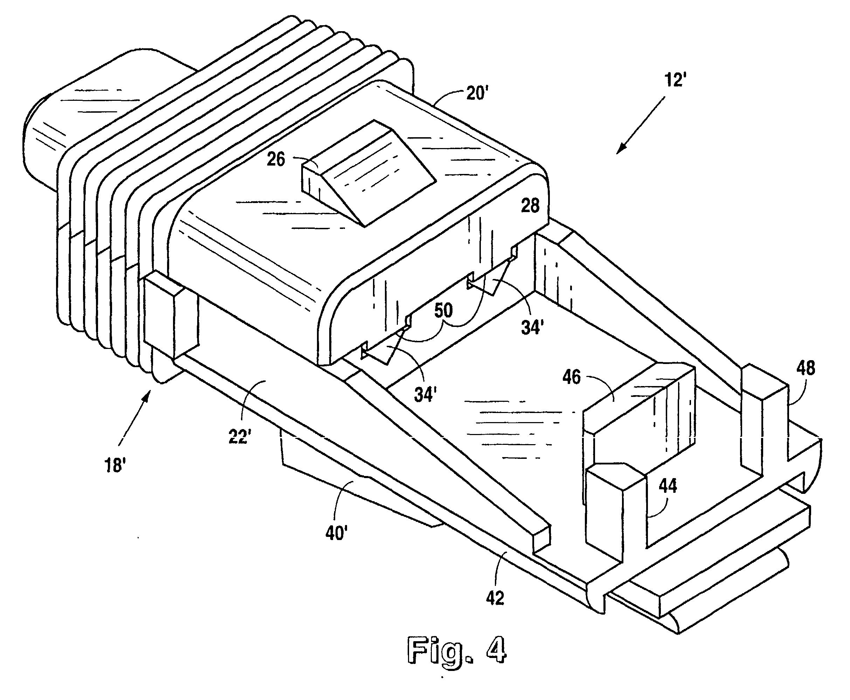

Figure 4 depicts a slightly different embodiment **12'** of a plug usable with the active device receptacle of the present invention. This embodiment employs a similar shroud, which is omitted from Figure 4 to better illustrate the alternative fiber holder **18'** and interior features. Holder **18'** is again formed from two blocks **20'** and **22',** but those two blocks are not identical in this embodiment. First, block **22'** has an extension or landing **42** which has several upstanding posts **44, 46** and **48.** These posts serve to guide the fibers within shroud **24** in proper position for location in the V-grooves of receptacle **14** as discussed further below, and limit skewing of the fibers, ensuring proper alignment of the fiber tips with openings in shroud **24.** Latch **40'** is molded into block **22',** along the underside of landing **42.** Second, the fiber passageways in holder **18'** are formed by providing V-shaped grooves **34'** only in block **22',** with the corresponding surface of block **20'** being flat to provide only three fiber-clamping surfaces. V-grooves **34'** are further recessed in block **22',** and steps **50** are formed on block **20'** which seat in the recesses and facilitate proper attachment of the blocks together.

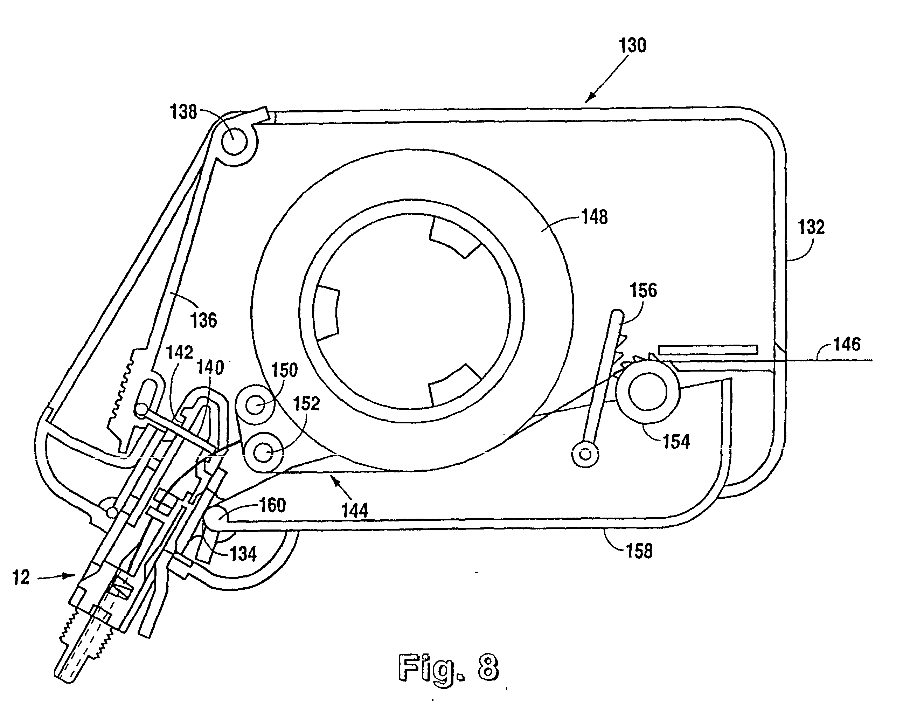

Fibers **30** and **32** extend generally straight within shroud **24** whenever plug **12** (or plug **12'**) is not installed in receptacle **14.** The fibers are "generally" straight in that they extend without significant bowing, although there might be some minute flexing of the fibers, e.g., as a result of gravity or plastic deformation. Sufficient space is provided within shroud **24,** however, to allow the fibers to bow significantly, as seen in Figures 1 and 2, when the plug is fully inserted into the receptacle. The forward end **52** of shroud **24** has a pair of slots **54** and **56** formed therein which provide access to the terminal ends of the fibers located within shroud **24.** A hood or door **58** is slidably attached to forward end **52** of shroud **24,** with two covers or bars **60, 62** which overlap slots **54** and **56,** respectively, when door **58** is in the closed position of Figure 3. When door **58** slides to the open position, bars **60** and **62** move to allow access to fibers **30** and **32** via slots **54** and **56,** respectively, without the need for the fibers to extend outside of shroud **24,** although this would be acceptable in alternative designs. Door **58** is slidably attached to shroud **24** with a snap fit resulting from two tongue-and-groove arrangements **64** and **66** (Figure 1). In addition to preventing dust from entering through the slots, door **58** also prevents any light in the plug fibers from escaping and injuring a user's eyes. As discussed below in conjunction with Figure 8, door **58** may also reveal, in the open position, one or more holes on the top of shroud **24** which may receive push rods to tip the fibers out openings **54** and **56** to allow cleaning of the fiber tips.

Other door arrangements may be provided for the plug. For example, it could have a door (not pictured) which raises vertically during the plug insertion process. This is accomplished by having the door sit in another part, such as a shuttle, that moves within the shroud body. The shuttle has a vertical slot on each of its side walls, and is open across each end. The solid door has a post that protrudes past the side walls of the shuttle, and into slots that exist in the shroud which have the following shape. Each of the slots starts at an upward angle (about 30°) for about 1 mm, then becomes horizontal for the majority of the distance, then rises again about 1 mm, and finishes with a second horizontal track (about 1.5 mm). When the plug comes into contact with a stop in the receptacle, it pushes the shuttle back within the shroud. During the first few millimeters of travel, the door is raised to its first position. In this position the fibers come in contact with the door, which deflects the fibers down at an obtuse angle, although this is not necessary. The door can also act as an alignment mechanism. This helps prevent end face contact of the plug fibers with the V-groove when they come into contact with the V-groove. Before the plug reaches full insertion, the shuttle reaches the second angled slot in the shroud. At this time the door is lifted to its final position, in which the door is no longer in contact with the fibers so that they are free to bow and provide adequate pressure on the receptacle. Returning of the shuttle and door is accomplished by a spring that pushes between the fiber holder and the shuttle. The particular advantage of this design is that it exposes the entire end of the plug, without any slot that the fibers must feed through to come into contact with the V-grooves.

In another door arrangement (not shown), the door slides across the plug during the insertion process, again using a shuttle that moves within the shroud body. The shuttle has a vertical slot on each of its side walls and is open across the end nearest the fiber holder. The end nearest the front of the shroud has an enclosed end with two vertical slots that are in line with the fibers, running from top to bottom. The door is nothing more than a rectangular plate, having two vertical slots that run from its bottom to about two material thicknesses from its top. Also, it has a notch cut in its top that rides in a ridge in the shroud. This ridge acts as the camming mechanism for the door. The cam is located on the inside of the roof of the shroud. From the front it starts at an obtuse angle until it reaches the center, where it runs down the length of its body. In the closed position the two sets of slots in the shuttle and door are offset from each other, providing a closed plug. When the plug comes into contact with a stop in the receptacle, it pushes the shuttle back within the shroud. During the first few millimeters of travel, the door slides sideways within the shroud at the same time the shuttle is moving backward. Once the two sets of slots are in line, providing an open slot for the fiber to exit through, the door has reached the straight section of the cam. At this point the door stops moving sideways and is carried back within the shroud by the shuttle. Returning of the shuttle and door is accomplished by a spring that pushes between the fiber holder and the shuttle. This design also exposes the entire end of the plug, and provides for smooth operation of the door. Variations of the plug design of the present invention will become apparent to those skilled in the art upon reference to the foregoing description.

A test plug may be used to test the operation of the receptacle. This plug would be essentially identical to the previously described plug, except that it receives a single fiber looped to have both ends extending toward the receptacle. In this manner, a signal may be sent down one of the receptacle fibers, received by the loop-back fiber in the plug, and then rerouted to the other receptacle fiber, which carries the signal to a test detection system.

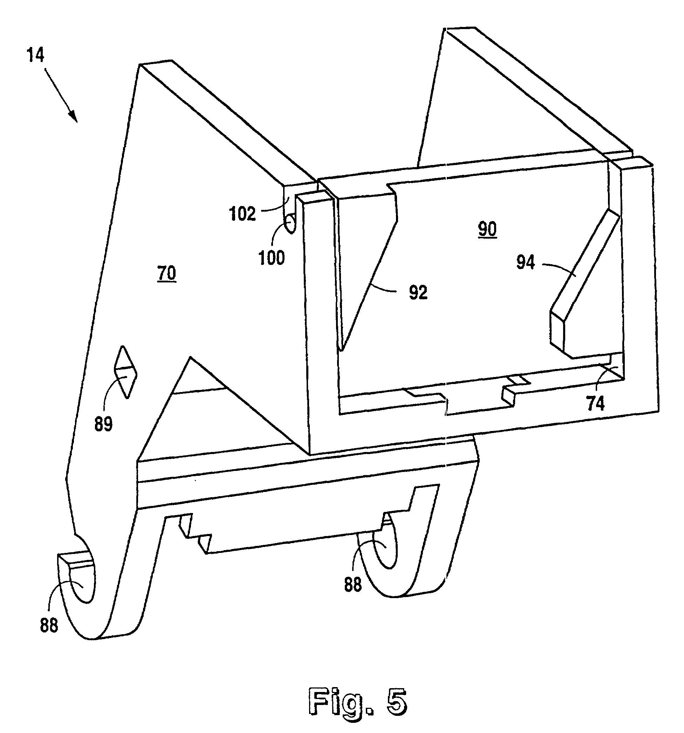

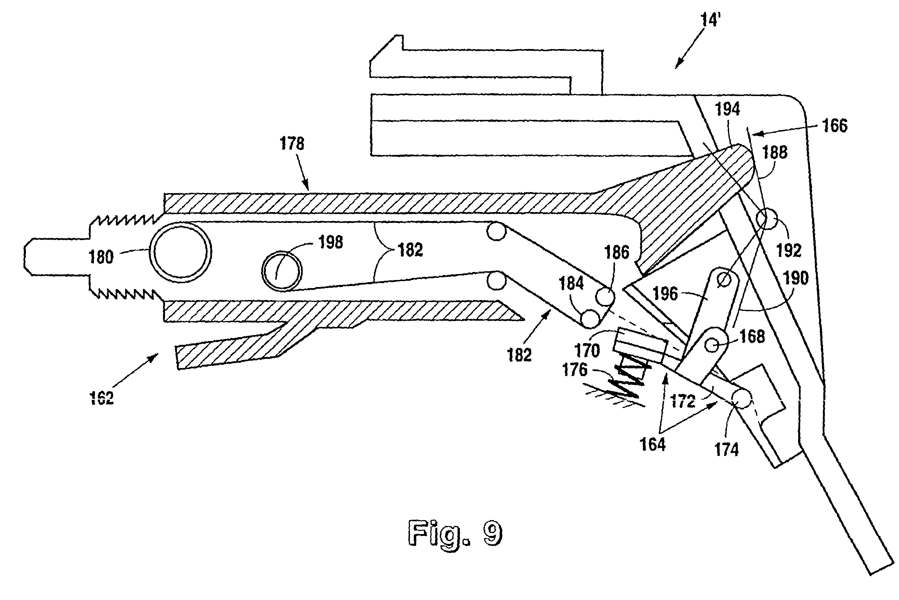

Receptacle **14,** also shown in Figure 5, includes a body or housing **70** and another fiber holder **72.** Housing **70** has an opening **74** whose size and shape generally corresponds to that of the forward end **52** of plug **12.** Housing **70** may also have appropriate features (such as latch arms **76**) allowing it to be releasably mounted to bulkhead **16** which may be, for example, a patch panel or workstation outlet (wall box faceplate). The latch means may provide for mounting from the front of the panel, to allow all preparatory work to be done at the front side of the panel, or may provide for mounting from the rear of the panel, to allow all preparatory work to be done at the back side of the panel. The receptacle fibers (only one of which, **78,** is visible in figures 1 and 2) are secured to receptacle fiber holder **72** by clamping as well, using a clamping plate **80** adapted to grip the fibers at a first end of holder **72.** The terminal ends of the receptacle fibers extend into fiber-alignment grooves formed in projections or fingers **82** and **84** at a second end of receptacle fiber holder **72.** The grooves are preferably V-shaped, although they may be more rounded, i.e., U-shaped. An intermediate section **86** of the fiber-alignment grooves is curved so as to maintain the receptacle fibers in the grooves by the elastic urging of the slightly bowed fibers. Additional means may be provided, such as the fiber hold-down shown in Figure 9, to retain the fibers firmly in the grooves. The fibers do not extend to the very tips of fingers **82** and **84** but rather terminate a sufficient distance from the tips to allow proper support of the plug fibers when the connector is in use. If the fiber-to-fiber contact occurs very near the tips of the V-grooves (or if the plug is inserted too far), the plug fiber can bend beyond the groove and lifted away from the apex, breaking the connection.

Receptacle **14** may have as many of these fingers with fiber-alignment grooves as there are fibers in plug **12.** Fingers **82** and **84** are shaped to project into slots **54** and **56,** respectively, of shroud **24** when plug **12** is fully inserted into receptacle **14.** Fingers **82** and **84** enter shroud **24** at an oblique (nonzero) angle with respect the plug axis, i.e., the axis defined by either of the plug fibers **30** or **32** when they are extending straight within shroud **24.** This angle is preferably about 42°, which balances concerns regarding fiber end face contact pressure, fiber forces directed into the V-groove, the effects of friction, and the desired tolerance window (a larger angle increases tolerances). Since the receptacle fibers are not directed toward opening **74,** there is no danger of escaping light injuring a user's eyes. Receptacle fiber holder **72** is pivotally attached to housing **70** by providing posts on the first end of holder **72** which snap into cutouts or hooks **88** formed at one end of receptacle housing **70.** Holder **72** releasably locks into place using bumps or studs formed on the side of the holder, which engage holes **89** in receptacle housing **70.** An alternative design for the receptacle fiber holder may be used in which the holder is molded as a single piece with a breakaway top or cover plate that can snap onto its base, the base having the fiber-positioning grooves.

Interconnection receptacle **14** (as well as the termination receptacle described below) may also have a flap or door **90** to minimize entry of contaminants through opening **74.** The disclosed embodiment uses a receptacle door which cooperates with the plug door to actuate plug door **58** between closed and open states as plug **12** is inserted into receptacle **14.** Specifically, receptacle door **90** has two camming surfaces **92** and **94** which interact with camming surfaces **96** and **98,** respectively, on plug door **58.** Receptacle door **90** is hinged along one edge by providing posts **100** that snap into cutouts **102** in receptacle housing **70.** Means (not shown), such as a spring or camming linkages molded into the part, may be used to bias door **90** in the closed position. When plug **12** is inserted into receptacle **14,** forward end **52** and plug door **58** push against receptacle door **90,** raising and opening it. The ramped camming surface **94** then begins to forcibly abut camming surface **98** on plug door **58,** pushing door **58** to the side to reveal slots **54** and **56.** If plug **12** is thereafter removed from receptacle **14,** then ramped camming surface **92** similarly pushes against camming surface **96** as the plug is removed, sliding plug door **58** back into its closed position. Shroud **24** has grooves or indentations **104** and **106** to accommodate camming surfaces **92** and **94** when the plug is in the receptacle, which also serve to further stabilize the connection. Other door designs may be implemented with receptacle **14,** such as a door which manually opened outward and snapped shut.

The receptacle may also have a door that acts as the latch for retaining the plug. In this alternative design (not shown), the plug body (shroud) has a notched area on its bottom side. The door in the receptacle is a rectangular, spring-loaded plate, with a tab (cantilever beam) protruding from its bottom when the door is in the closed position. When the plug is inserted into the receptacle, the door rotates from a vertical to a horizontal position. Once the plug is fully inserted, the notch clears the top edge of the door. Then the door springs back up a few degrees and bottoms out on the area in the notch. This provides the locking between the two parts. Removing the plug is accomplished by squeezing on the plug and tab portion of the door. This causes the door to return to its horizontal position and allows the plug to slide back out of the receptacle. The tab would be formed such that, when the plug is removed, there would not be enough friction to keep the finger on the tab. This construction provides for a simpler plug design.

The receptacle may further be modified with internal latches to be mounted in two different positions on the wall or bulkhead, a first position wherein it is fully operational and flush with the wall, and a second position wherein it projects slightly outward from the wall. This provides access to the interior of the receptacle for cleaning.

The plug-receptacle latching mechanism may advantageously be designed to prevent breakage of the plug assembly when the plug cable is pulled excessively, such as if someone trips over the cable. This is achieved by providing a latch geometry which allows the plug to be pulled out of the receptacle if the tension on the cable exceeds a given pull-out force. This results in the plug releasing from the receptacle rather than the cable pulling out of the plug, and this aspect is made more acceptable because of the automatic shutting of the plug door upon removal from the receptacle.

All of the components of connector **10** (except plug boot **38**) may be formed of any durable material, preferably an injection moldable polymer such as polycarbonate, VALOX (a polyester sold by General Electric), or RADEL (a polyarylsulfone sold by Amoco). The material may include conductive fillers to render the components semiconductive in order to minimize triboelectric charging which can induce fiber end contamination. Boot 38 is preferably formed of low modulus copolyester elastomer such as that available from RTP of Winona, Minnesota, under material number 1559X67420B.

Assembly and installation of connector **10** is straightforward. Plug **12** is typically assembled in the factory, although it may easily be assembled in the field. In this regard, the term "pre-terminated" as used herein simply refers to the attachment of optical fibers to plug **12** or receptacle **14** regardless of whether such attachment occurs in the factory, the field, or elsewhere. It is also understood that plug **12** or receptacle **14** could be mounted on a jumper cable or patch cord with any kind of optical connector at the other end of the fibers. It is recommended that fibers be used which have a longer life when exposed to indoor environments, such as the high-strength fibers available from Minnesota Mining and Manufacturing Co. (3M).

Those fibers have a conventional core and cladding which is surrounded by a novel three-layer construction, as discussed in U.S. Patent No. 5,381,504. Those skilled in the art will also appreciate that the connector of the present invention can accommodate discrete optical fibers or multifiber ribbons, as well as both singlemode and multimode fibers.

Fibers which are to be pre-terminated to either plug **12** or receptacle **14** should be stripped, cleaved and cleaned. If the fibers are in the form of a ribbon which is part of a bundled group of ribbons in a cable, then a portion of the cable jacket must first be cut back to reveal the ribbons. Most cables have several protective layers, and each of these layers must be removed to provide access to the fiber ribbons. Similar steps must be taken to remove the protective layers of a cable having a single discrete fiber. After the fibers have been removed from the protective cable jacket, they are stripped. The stripped fibers are then ready for cleaving which may be accomplished using any one of several commercially available fiber cleavers, such as that shown in U.S-A-5,024,363. The cleave length for attachment of the fibers to plug **12** is the distance from fiber holder **18** which, in the preferred embodiment, is about **23** mm. For attachment of fibers to receptacle **14,** the cleave length is the distance from fiber holder **72** which, in the preferred embodiment, is about 15 mm. Any debris should be cleaned off the fibers using a lint-free cloth. Prior to removing the fibers from the cleaver, the craftsperson may inspect the fibers to confirm that the end faces on all fibers are acceptable, i.e., that they are smooth cleaves with no spikes. The fiber viewer disclosed in U.S-A-5,210,647 may be used for this purpose. Once the craftsperson is satisfied that each of the fibers has an acceptable end face, the fibers may be removed from the cleaver. In the preferred embodiment, the fiber end faces are flat with a chamfered or beveled periphery (or at least partially beveled) to obtain the advantages a sociated with such a fiber end profile, as discussed more thoroughly in WO-A-95/07794 The fiber end faces may alternatively be radiused (generally spherical). The fibers may further optionally be provided with an asymmetric treatment, like cleaving so as to impart an angled end face, as taught in U.S-A-5,048,908. If so, in order to minimize insertion losses and reflections, the fibers should be inserted so that the orientation of the angled end faces of one set of fibers (i.e., in plug **12**) complements the orientation of the angled end faces of the other set of fibers (i.e., in receptacle **14**). For the plug fibers, fiber preparation may be done after the fiber cable has been threaded through boot **38**.

Final assembly of plug **12** comprises the simple steps of clamping the fibers in the V-grooves of holder **18** and snapping shroud **24** onto holder **18**. An assembly fixture may be used to guide shroud **24** onto the plug fiber holder so as to avoid damaging the fibers as they are inserted into the shroud. The ends of the plug fibers should terminate about 0.5 mm from the end of the shroud. Completion of receptacle **14** is also simple. The receptacle fibers are clamped onto fiber holder **72** using clamping plate **80,** with the ends of the receptacle fibers terminating in the fiber-alignment grooves about 15 mm from the tips of fingers **82** and **84.** The receptacle fibers may be cleaved after securing them to the fiber holder. The fibers may be assembled into the holder using the V-groove to actually pick up the fiber holder from the cleaver, to avoid contamination of the fiber tips, if mating and guiding features are provided on one or both parts. A punch-down tool could also be used to simplify assembly. Fiber holder **72** is attached to housing **70,** first by pushing the pivot posts into cutouts **88,** and then snapping the studs into holes **89.** Care should be taken during placement of the fibers in the V-grooves and attachment of the holder to the receptacle to not contaminate the fiber tips.

Installation of connector **10** is equally straightforward. Receptacle **14** is optionally mounted to any desired surface by convenient means, such as latching arms **7**6 (other constructions could be molded into housing **70** for custom mounting). Several receptacles could also be mounted in a single module, and they can be designed for front or rear loading, or sliding from the side. After receptacle **14** is mounted, the connection is completed by simply inserting plug **12** into opening **74.** Plug **12** is released from receptacle **14** by latch **40.**

Figures 1 and 2 depict full insertion of the plug. As plug **12** is inserted, door **90** opens and cams door **58** open as described above, allowing fingers **82** and **84** to enter slots **54** and **56** respectively. Plug fibers **30** and **32** contact the fiber-alignment grooves in fiber holder **72,** and slide until their end faces abut the respective end faces of the receptacle fibers, and then become bowed when the plug is fully inserted. The plug fibers may undergo an S-shaped bend. All force at the fiber-to-fiber interface comes from the resilience (elastic deformation) of bowed fibers **30** and **32** which maintains a continuous compressive load between the ends. Connector **10** is preferably designed to maintain a minimum bend radius of 7.6 mm (0.3 inch) on the fibers.

The dimensions of the various components of connector **10** may vary considerably depending upon the desired application. The following approximate dimensions are considered exemplary. Plug **12** has an overall length of **57** mm, a width of 12 mm, and a thickness of 8 mm, and plug fiber holder **18** provides clamping grooves that are 13 mm long. Plug shroud **24** extends 25 mm beyond holder **18,** providing an interior space which is 24 mm long, 10 mm wide and 6 mm high. Opening **74** of receptacle **14** is 12 mm x 10 mm. Its overall height and depth are **38** mm and 36 mm. Receptacle fiber holder **72** is **20** mm long (from the end where the fibers are clamped to the tips of fingers **82** and **84**), 12 mm wide and 1.5 mm thick. The fiber-alignment grooves in fingers **82** and **84** are 11.5 mm long and have a maximum depth of 2 mm which suitably accommodates most conventional optical fibers. The interior angle of the V-grooves should not be too narrow since this might result in excess friction with the fibers, but it also should not be too wide since this would not keep the fibers guided properly. A 90° interior angle is believed to be a good compromise.

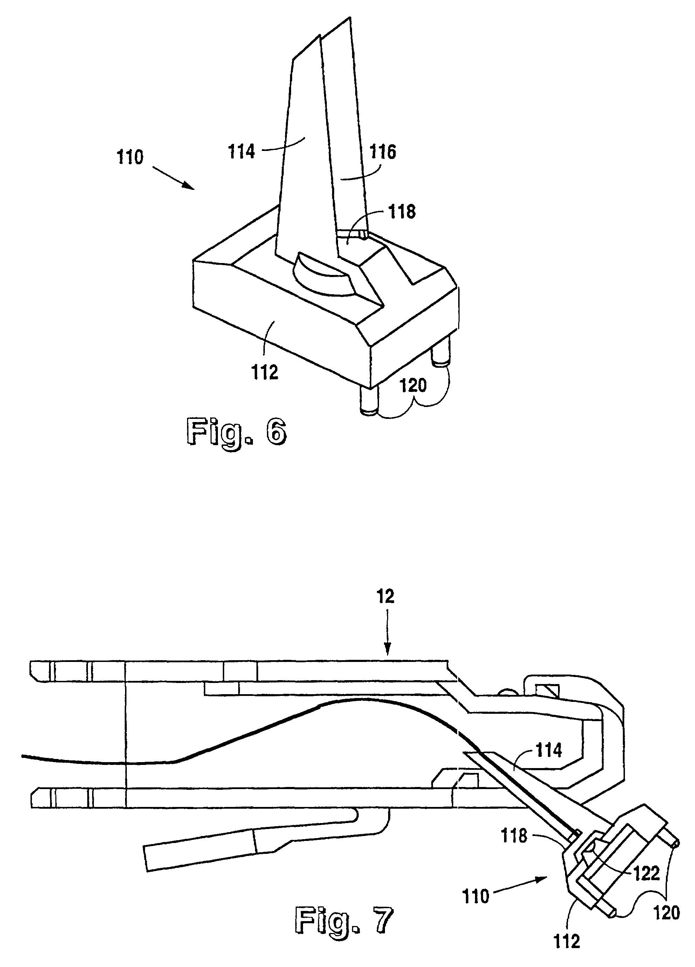

In the following fiber optic termination will be described which is particularly useful with the foregoing connectors for fiber-to-fiber interconnection. Figure 6 illustrates one embodiment **110** of a termination fixture of the present invention adapted for use with an active optical device. Fixture **110** is essentially substituted for receptacle fiber holder **72** of fiber-to-fiber receptacle **14,** and has a base **112** and a projection or finger **114** similar to fingers **82, 84.** Finger **114** has a fiber-alignment groove **116** to receive one of the plug fibers, whose terminal end face comes to rest on a fiber stop or surface **118,** as shown in Figure 7. The force applied to the fiber is designed to be sufficient to remove any air gap between the fiber end face and surface **118,** but not so great as to lead to degradation of the fiber end face as it moves across surface **118** such as from scratching. The light-transmitting material defining surface **118** is usually clear (i.e., transparent to the wavelength of light transmitted in the optical fibers), allowing the active optical device to be placed on the other side of base **112** whereby the light signal passes through the material; the material may be coated or otherwise fabricated to affect the light signal, such as controlling its intensity or polarizing it. Posts 120 formed on base **112** may be used to align and attach fixture **110** to the active optical device substrate, e.g., a printed circuit board (PCB). A fiber stub may also be placed in V-groove **116** with one end of the fiber stub at fiber stop **118,** and the other end located in an intermediate portion of groove **116** to interconnect with the fiber to be terminated.

Fixture **110** preferably has a unitary construction of a clear, injection-moldable polymer such as ULTEM (a polyetherimide available from General Electric), and may further include a lens **122** formed opposite surface **118** to focus light from/to the fiber. The active optical devices and supporting structures are beyond the scope of the present invention but may include, for example, photoelectric sensors or laser diodes. Other passive optical devices (beam splitters, stub fibers in ferrules, etc.) which direct the light to or from the active optical devices may be employed, and different geometries of the termination fixture may be used to direct or focus light to a particular location, including geometries which employ total internal reflection (TIR). The TIR method of coupling light from a bare fiber onto a photodetector, or from a light source into a fiber, using the present invention has a number of advantages. One is that the position of the fiber is determined by the fiber stop, allowing the plug fiber to be repeatably located in the same position. The position of the fiber end is thus predetermined by the tolerances on the molded part and the location accuracy of the active elements, i.e., the photodetector or light source, hence this obviates the need for active optical alignment. Another advantage is that, coupled with an S-bend of the fiber, the overall height of the transceiver module can be reduced. An S-bend could also be used in a connector for two parallel, but not coaxial, fibers. Finally, the transceiver electronics can be mounted on a board that lies in the same plane in which the connector is inserted. A fiber stub may also be used in an active optical device termination, the stub (not shown) secured in a holder like receptacle holder **72**.

Besides providing for quick and easy connection and disconnection, connector **10** has several other advantages. As previously mentioned, it may easily be pre-terminated in the field as well as the factory. Even if the fibers in either the plug or receptacle do not terminate at exactly the desired position there will still be full fiber-to-fiber contact in the completed connection since the resilient stress of the bent fibers provides a positive abutment force; in other words, the tolerance in the relative positions of a fiber pair is eased by the slack in the plug fibers. Plug **12** is also inherently pull-proof due to this biasing. Tolerances are also not critical in the transverse position of a given fiber pair since V-grooves **36** serve to align the fibers and the fibers are biased toward the apex of the grooves. The surface finish of the fiber-alignment grooves should be smooth and the groove angle be well-defined; this finish is easy to fabricate using standard injection molding techniques. The V-groove preferably has a sharpness with no more than a 0.025 mm (0.001 inch) radius. It is preferable to use a material for the V-groove substrate which is hard, to resist abrasion, but also having a low coefficient of friction to minimize frictional forces on the fiber as it slides in the groove. Also, since the receptacle fibers enter housing **70** at an oblique angle (up to 90°) with respect to the plug axis, it requires very little depth for mounting. Moreover, the mounting methods are compatible with those of RJ45 jacks. Finally, the reduced part count and the fact that all parts can be injection molded contribute to a very low cost connector.

With further reference to Figures 8 and 9, those figures depict tools which may be used in conjunction with the present invention, to clean the tips of the various optical fibers. Figure 8 shows a tool **130** used to clean the tips of the fibers in plug **12.** Tool **130** has a body **132** adapted to be held in the hand, with an opening **134** in body **132** for receiving plug **12.** Tool 130 also has an actuation member or lever **136** pivotally attached to body **130** at **138.** In Figure 8, lever **136** is shown in the actuated position, in which state a push rod or tab **140** enters a hole or slot **142** in the top of the plug shroud, and contacts the plug fibers, forcing them out of the shroud through slots **54, 56.** In the unactuated position, **lever 136** swings away from opening **134** and retracts push tab **140** so that plug **12** can enter tool **130** without interfering with the push tab. Lever **136** is preferably biased toward the unactuated position by, e.g., a spring.

Opening **134** and lever **136** are located such that the plug fibers, when pushed through the shroud slots, are forcibly abutted against the adhesive side **144** of a strip of tape **146.** Tape **146** is peeled away from a tape roll **148** which is stored in tool body **132.** Two rollers **150** and **152** are provided to allow the tape to advance so that a fresh adhesive surface is presented to the fiber tips. To facilitate use, tape **146** may be wound about another roller **154** forming a ratchet wheel which engages a pawl **156.** Pawl **156** is in turn located on another handle or pivoting lever **158** attached to tool body **132** at **160.** In this manner, the user may advance the tape and clean the plug fibers by squeezing handle **158** while holding the tool. Handle **158** may also be biased by, e.g., a spring, toward the outermost position.

Figure 9 shows a tool **162** used to clean the tips of the fibers in a modified receptacle **14'.** The shape of tool **162** is reminiscent of plug **12,** whereby it is adapted to be inserted into receptacle **14'** in a similar manner. Receptacle **14'** is generally identical to receptacle **14,** except for the provision of certain features designed to raise the receptacle fibers up out of the V-grooves for cleaning. These features include a fiber hold-down or retainer **164** and a tilt linkage **166.** Fiber retainer **164** is pivotally attached to the fiber holder at **168,** and includes a block or pad **170** located at one end of the retainer arm **172** adapted to push the fibers into the V-groove and keep them nested properly therein. Pad **170** may be molded into the fiber hold-down. The other end of retainer arm **172** has formed thereon a boss or button **174** which pushes against the receptacle fibers when retainer arm **172** is in the actuated position, as shown in Figure 9. Pushing of the fibers by boss **174** causes the fibers to deflect out of the V-grooves. Fiber retainer **164** is preferably biased, e.g., by a spring **176,** toward the unactuated position, i.e., pushing pad **170** against the fibers to maintain them in the V-grooves.

Tool **162** includes a body **178** which, like tool **130,** also houses a supply spool **180** of adhesive tape **182.** Rollers **184** and **186** serve to position tape **182** such that its adhesive side can again be advanced to clean the fiber tips. The fibers are deflected when tool **162** enters receptacle **14'** by means of tilt linkage **166,** which includes two tilt arms **188** and **190** fixed together at another pivot point **192.** A projection or actuator bump **194** formed on the front end of tool **162** pushes against tilt arm **188** as the tool is inserted into the receptacle. This in turn causes tilt arm **190** to rotate and push against a catch or finger **196** attached to fiber retainer **164.** Forcible contact between tilt arm **190** and finger **196** causes fiber retainer **164** to pivot about point **168,** thereby pushing boss **174** against the fibers and deflecting them out of the V-grooves. Tape **182** in tool **162** may be taken-up on another spool **198,** or exit tool body **178** in a manner similar to that shown in Figure 8 for tool **130.** A small dial or twist rod may be attached to take-up spool **198** and extend outside of body **178** to allow the user to advance the tape.

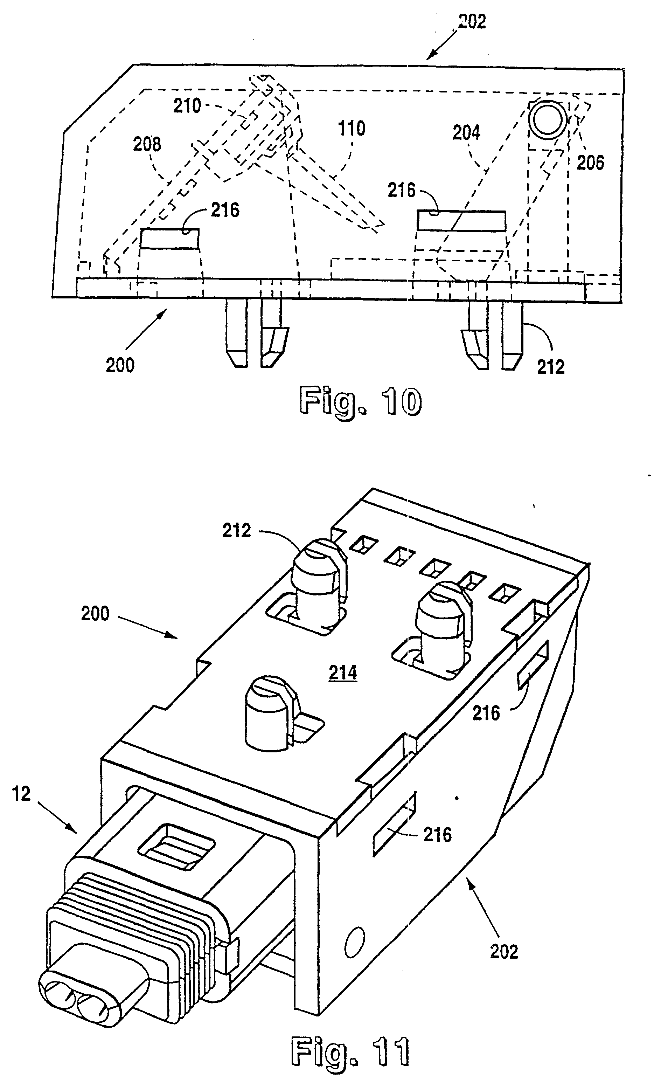

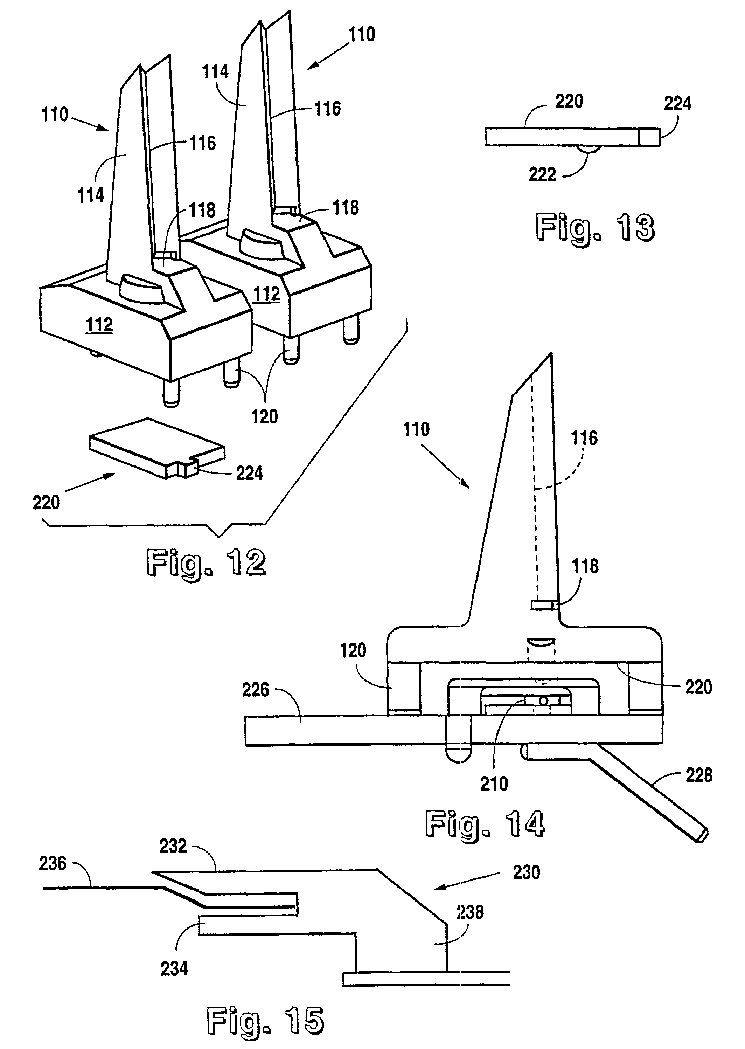

Figures 10 and 11 depict additional features of one embodiment **200** of the active optical device receptacle of the present invention. In this embodiment, active device receptacle **200** includes a body or housing **202** enclosing a termination fixture **110** and which is adapted to receive a fiber optic plug such as plug **12.** Housing **202** has a spring-loaded door **204** to keep debris from entering the receptacle opening when the receptacle is not in use. Door **204** has appropriate latching features **206** to complement a plug latch such as **40'** described above. Fixture **110** is mounted by means of its posts **120** to a substrate **208** such as a printed circuit board (PCB). PCB **208** also supports an optoeletronic device **210** (active optical device such as a photodetector or semiconductor light source) which is located at an appropriate position on PCB **208** with respect to the termination fixture, i.e., with respect to lens **122** and so operatively connected to the terminal end of any fiber which is terminated in the fixture and abutting the fiber stop **118.** Any conventional active device may be used. Other electronic components may be mounted on PCB **208,** such as LED drivers or data quantizers. PCB **208** is preferably mounted at an angle of about 48° with respect to the axis of the receptacle housing, i.e., with respect to the axis of the plug as it enters the receptacle, in order to position the fixture projection **114** at an appropriate angle for receiving the terminal end of the fiber.

With reference to Figure 11, means may be provided to attach receptacle **200** to another structure, such as another PCB (motherboard), the means comprising in this embodiment several latching posts **212** attached to the underside of housing **202.** Posts **212** may be integrally formed with a bottom plate **214** that is removably attached to housing **202** by means of additional latch arms **216** formed on bottom plate which engage openings or slots **218** formed in the sidewalls of housing **202.** Latch arms **216** also serve to secure substrate **208** as seen in Figure 10.

Figure 12 illustrates how a plurality of termination fixtures may be placed in series, side-by-side, to receive a plurality of optical fiber terminations in a small volume of space. Figure 12 also illustrates the use of an insert piece or optical plate **220** which may be attached to any of the termination fixtures to change the desired optical characteristics. For example, plate **220** may have a lens **222** formed therein to supplement, or substitute for, lens **122** (see Fig. 13). In the depicted embodiment, the lens is formed by a diamond pin in the mold tool, and has a radius of curvature of about 0.37 mm (0.01458 inch) the height of the lens is 0.10 mm (0.004 inch) and the remaining thickness of optical plate **220** is about 0.56 mm (0.022 inch) This lens **222** is used in conjunction with a lens **122** having a radius of curvature of about 0.30 mm (0.01193 inch) and having a height of about 0.25 mm (0.01 inch) When optical plate **220** is properly located in base **112** of fixture **110,** lens **122** is located about 0.51 mm (0.02 inch) above the upper surface of plate **220.** The distance from the surface of fiber stop **118** to the bottom of the fixture (i.e., to the top of the PCB substrate **208)** is about 3.05 mm (0.12 inch) The thickness of the light-transmitting portion of the fixture base (from the tip of lens **122** to fiber stop **118)** is about 1.02, mm (0.04 inch) Other optical features may be used as desired, such as polarizers, diffraction or holographic gratings, filters, microstructured surfaces, a Fresnel lens, etc. The feature is placed at an appropriate location on plate **220** to align with fiber stop **118,** and plate **220** may further be mechanically polarized or keyed so that it can be placed in the base **112** of fixture **110** in only one orientation. Keying may be povided by forming a bump **224** on plate **220** (see Figure 13) which fits with a notch formed in the underside of base **112.**

Figure 14 illustrates how one of a series of termination fixtures may be placed on a substrate, such as another PCB **226,** in the side-by-side fashion of Figure 12. Leads **228** may be formed on the opposite side of PCB **226** to interconnect the respective active devices with other control electronics.

Figure 15 depicts two optional modifications to the termination fixture. The modified fixture **230** has two fingers or projections **232** and **234,** each having a fiber-receiving groove therein, positioned to induce an double bend, or S-bend, in the fiber **236** to be terminated. Fixture **230** also has a base portion **238** designed for total internal reflection of the light signal. Fixture **230** may be formed of two pieces, one having the V-groove projections and an integrally molded lens, and the other have the TIR base also with one or more integrally molded lenses. The various surfaces of the base may be coated to provide improved reflection, or shaped into lenses or other structured surfaces to internally focus the light in any desired manner. Lens prescriptions may be different for transmitter and receiver elements. The coating may be used to control the amount of light reflected in some applications.

Although the invention has been described with reference to specific embodiments, this description is not meant to be construed in a limiting sense. Various modifications of the disclosed embodiment, as well as alternative embodiments of the invention, will become apparent to persons skilled in the art upon reference to the description of the invention. It is therefore contemplated that such modifications can be made without departing from the scope of the present invention as defined in the appended claims.

## Claims

1. A fixture for terminating an optical fiber, comprising:
- a base (112) having a light-transmitting portion,
- a projection (114) attached to said base (112) proximate said light-transmitting portion thereof and projecting away therefrom, said projection (114) having a fiber-receiving groove (116) directed toward a fiber stop surface (118) located on said light-transmitting portion of said base (112), and
- means for aligning said light-transmitting portion of said base (112) with an optical device,
characterized in that
- said aligning means comprises a plurality of posts (120) attached to the opposited side of said base (112) and said posts projecting therefrom to enable the fixture to engage an outer surface of an optical device or of a substrate carrying an optical device so as to locate the fiber stop surface above the optical device at a predetermined distance and to align said fiber stop surface (118) with the optical device.

2. The termination fixture of Claim 1 wherein said base (112) has a lens (122) integrally formed with said light-transmitting portion thereof.

3. The termination fixture of Claim 1 or 2 wherein said light-transmitting portion of said base (112) has a plurality of surfaces positioned to provide total internal reflection of a light beam directed at said fiber stop surface (118).

4. The termination fixture of any one of Claims 1 to 3 further comprising insert means (220) for changing an optical characteristic of the fixture.

5. The termination fixture of any one of Claims 1 to 4 wherein said fiber-receiving groove (116) is generally straight and said fiber stop surface (118) is generally orthogonal to said fiber-receiving groove (116).

6. The termination fixture of any one of the preceding claims as far as dependent on Claim 2 wherein said lens (122) is formed on said light-transmitting portion of said base (112) opposite from said fiber stop surface (118).

7. The termination fixture of Claim 5 or 6 as far as dependent of Claim 4 wherein said insert means (220) comprises an optical plate member sized to fit in a corresponding cutout in said base (112) proximate said light-transmitting portion thereof.

8. The termination fixture of Claim 7 wherein said optical plate has a lens (222) integrally formed therewith.

9. The termination fixture of Claim 7 or 8 wherein said optical plate is mechanically polarized (bump 224) to fit only one way in said cutout in said base (112).

10. A device for terminating an optical fiber, comprising:
- a housing (70) having an opening (74) for receiving the terminal end of an optical fiber (30; 32),
- at least one termination fixture (110) located in said housing (70), said fixture (110) including a base (112) and a projection (114) attached to said base (112) proximate a light-transmitting portion thereof and projecting away there from, said projection (114) having a fiber-receiving groove (116) with a first end directed generally toward said opening (74) of said housing (70), and a second end directed toward a fiber stop surface (118) located on said light-transmitting portion of said base (112); and
- at least one optical device (210) located in said housing (70) and positioned with respect to said termination fixture (110) to operatively connect with said light-transmitting portion of said base (112);
- wherein said termination fixture (110) further comprises means for aligning said light-transmitting portion of said base with said optical device (210),
characterized in that
- said aligning means comprises a plurality of posts (120) attached to the opposite side of said base (112) of said termination fixture (110) and said posts projecting from said base (112) to enable the fixture to engage an outer surface of said optical device (210) or said housing (70) so as to locate the fiber stop surface above the optical device at a predetermined distance and to align said fiber stop surface (118) with saidoptical device.

11. The device of Claim 10 wherein:
- said optical device (210) is mounted on a substrate (226) ;
- said termination fixture (110) is mounted on said substrate (226); and
- said substrate (226) is attached to an interior portion of said housing (70).

12. The device of Claim 10 or 11 wherein said housing (70) has a door (90) located at said opening (74) biased to a closed position, said door (90) having latch means for releasably receiving an optical fiber plug (12).

13. The device of any one of Claims 10 to 12 wherein said housing (70) has at least two of said termination fixtures (110) and at least two of said optical devices (210) operatively connected, respectively, to said two termination fixtures (110).

14. The device of any one of Claims 10 to 13 further comprising insert means (220) for changing an optical characteristic of said termination fixture (110).

15. The device of any one of the preceding claims as far as dependent on Claim 11 wherein said housing (70) includes a removable plate allowing access to an interior portion of said housing (70), said plate having latch arms which attach to said housing (70) and secure said substrate (226) in said housing (70).

16. The device of any one of Claims 10 to 15 wherein
- said two optical devices (210) are mounted on a common substrate (226) ;
- said two termination fixtures (110) are mounted on said common substrate (226); and
- said substrate (226) is attached to an interior portion of said housing (70).

17. The device of any one of claims 10 to 16 wherein said base (112) of said termination fixture (110) has a lens (122) integrally forced with said light-transmitting portion of said base (112).

18. The device of any one of the preceding claims as far as dependent on Claim 17 wherein said lens (122) is formed on said light-transmitting portion of said base (112) of said termination fixture (110) opposite from said fiber stop surface (118).

19. The device of Claims 11 to 18 wherein said light-transmitting portion of said base (112) of said termination fixture (110) has a plurality of surfaces positioned to provide total internal reflection of a light beam directed at said fiber stop surface (118).

20. The device of Claims 11 to 19 wherein said fiber-receiving groove (116) is generally straight and said fiber stop surface (118) is generally orthogonal to said fiber-receiving groove (116).

21. The device of any one of the preceding claims as far as dependent on Claim 14 wherein said insert means (220) comprises an optical plate member sized to fit in a corresponding cutout in said base (112) proximate said light-transmitting portion thereof.

22. The device of Claim 21 wherein said optical plate has a lens (222) integrally formed therewith.

23. The device of Claims 21 or 22 wherein said optical plate is mechanically polarized (bump 224) to fit only one way in said cutout in said base (112).

## Patentansprüche

1. Vorrichtung zum Abschließen einer optischen Faser, mit:
- einer Basis (112) mit einem Lichtdurchlaßbereich,
- einem Vorsprung (114), der an der Basis (112) nahe dem Lichtdurchlaßbereich derselben angebracht ist und von dieser absteht, wobei der Vorsprung (114) eine Faseraufnahmenut (116) aufweist, die einer auf dem Lichtdurchlaßbereich der Basis (112) angeordneten Faseranschlagfläche (118) zugewandt ist, und
- einer Einrichtung zum Ausrichten des Lichtdurchlaßbereichs der Basis (112) auf eine optische Vorrichtung,
dadurch gekennzeichnet, daß
- die Ausrichteinrichtung mehrere Pfosten (120) aufweist, die an den entgegengesetzten Seiten der Basis (112) angebracht sind und von diesen vorstehen, um das Angreifen der Vorrichtung an einer Außenfläche einer optischen Vorrichtung oder eines eine optische Vorrichtung tragenden Substrats zu ermöglichen, um die Faseranschlagfläche in einer vorbestimmten Entfernung über der optischen Vorrichtung anzuordnen und die Faseranschlagfläche (118) auf die optische Vorrichtung auszurichten.

2. Abschlußvorrichtung nach Anspruch 1, bei der die Basis (112) eine einstückig mit dem Lichtdurchlaßbereich ausgebildete Linse (122) aufweist.

3. Abschlußvorrichtung nach Anspruch 1 oder 2, bei der der Lichtdurchlaßbereich der Basis (112) Flächen aufweist, die derart positioniert sind, daß sie eine vollständige innere Reflexion eines auf die Faseranschlagfläche (118) gerichteten Lichtstrahls bewirken.

4. Abschlußvorrichtung nach einem der Ansprüche 1 bis 3, ferner mit einer Einsatzeinrichtung (220) zum Verändern einer optischen Eigenschaft der Vorrichtung.

5. Abschlußvorrichtung nach einem der Ansprüche 1 bis 4, bei der die Faseraufnahmenut (116) im wesentlichen gerade ist und die Faseranschlagfläche (118) im wesentlichen orthogonal zur Faseraufnahmenut (116) verläuft.

6. Abschlußvorrichtung nach einem der vorhergehenden Ansprüche soweit auf Anspruch 2 rückbezogen, bei der die Linse (122) auf dem Lichtdurchlaßbereich der Basis (112) gegenüber der Faseranschlagfläche (118) ausgebildet ist.

7. Abschlußvorrichtung nach Anspruch 5 oder 6, sofern auf Anspruch 4 rückbezogen, bei der die Einsatzeinrichtung (220) ein optisches Plattenteil aufweist, das derart bemessen ist, daß es in einen entsprechenden Ausschnitt in der Basis (112) nahe des Lichtdurchlaßbereichs paßt.

8. Abschlußvorrichtung nach Anspruch 7, bei der die optische Platte eine einstückig mit dieser ausgebildete Linse (222) aufweist.

9. Abschlußvorrichtung nach Anspruch 7 oder 8, bei der die optische Platte mechanisch polarisiert ist (Erhebung 224), um nur auf eine Weise in den Ausschnitt der Basis (112) zu passen.

10. Vorrichtung zum Abschließen einer optischen Faser, mit:
- einem Gehäuse (70) mit einer Öffnung (74) zum Aufnehmen des Endes einer optischen Faser (30; 32),
- wenigstens einer Abschlußvorrichtung (110) in dem Gehäuse (70) wobei die Vorrichtung (110) eine Basis (112) und einen an der Basis (112) nahe einem Lichtdurchlaßbereich derselben und von dieser abstehend angebrachten Vorsprung (114) aufweist, der eine Faseraufnahmenut (116) aufweist, deren erstes Ende im wesentlichen der Öffnung (74) des Gehäuses (70) zugewandt ist und deren zweites Ende einer Faseranschlagfläche (118) zugewandt ist, die auf dem Lichtdurchlaßbereich der Basis (112) angeordnet ist, und
- wenigstens einer optischen Vorrichtung (210), die im Gehäuse (70) angeordnet und derart in bezug auf die Abschlußvorrichtung (11) positioniert ist, daß sie eine betriebsmäßige Verbindung mit dem Lichtdurchlaßbereich der Basis (112) bildet;
- wobei die Abschlußvorrichtung (110) ferner eine Einrichtung zum Ausrichten des Lichtdurchlaßbereichs der Basis auf die optische Vorrichtung (210) aufweist,
dadurch gekennzeichnet, daß
- die Ausrichteinrichtung mehrere Pfosten (120) aufweist, die an den entgegengesetzten Seiten der Basis (112) der Abschlußvorrichtung (110) angebracht sind und von der Basis (112) vorstehen, um das Angreifen der Vorrichtung an einer Außenfläche einer optischen Vorrichtung (210) oder des Gehäuses (70) zu ermöglichen, um die Faseranschlagfläche in einer vorbestimmten Entfernung über der optischen Vorrichtung anzuordnen und die Faseranschlagfläche (118) auf die optische Vorrichtung auszurichten.

11. Vorrichtung nach Anspruch 10, bei der
- die optische Vorrichtung (210) auf einem Substrat (226) angebracht ist;
- die Abschlußvorrichtung (110) auf dem Substrat (226) angebracht ist, und
- das Substrat (226) an einem inneren Bereich des Gehäuses (70) angebracht ist.

12. Vorrichtung nach Anspruch 10 oder 11, bei der das Gehäuse (70) eine an der Öffnung (74) angebrachte Klappe (90) aufweist, die in eine geschlossene Position vorgespannt ist, wobei die Klappe (90) eine Riegeleinrichtung zum lösbaren Aufnehmen eines optischen Faserverbinders (12) aufweist.

13. Vorrichtung nach einem der Ansprüche 10 bis 12, bei der das Gehäuse (70) wenigstens zwei Abschlußvorrichtungen (110) und wenigstens zwei optische Vorrichtungen (210) aufweist, die jeweils betriebsmäßig mit den beiden Abschlußvorrichtungen (110) verbunden sind.

14. Vorrichtung nach einem der Ansprüche 10 bis 13, ferner mit einer Einsatzeinrichtung (220) zum Verändern der optischen Charakteristika der Abschlußvorrichtung (110).

15. Vorrichtung nach einem der vorhergehenden Ansprüche, sofern auf Anspruch 11 rückbezogen, bei der das Gehäuse (70) eine abnehmbare Platte aufweist, die Zugang zu einem inneren Bereich des Gehäuses (70) ermöglicht, wobei die Platte Riegelarme aufweist, die am Gehäuse (70) angreifen und das Substrat (226) im Gehäuse (70) halten.

16. Vorrichtung nach einem der Ansprüche 10 bis 15, bei der
- die beiden optischen Vorrichtungen (210) auf einem gemeinsamen Substrat (228) angebracht sind;
- die beiden Abschlußvorrichtungen (110) auf dem gemeinsamen Substrat (226) angebracht sind, und
- das Substrat (226) an einem inneren Bereich des Gehäuses (70) angebracht sind.

17. Vorrichtung nach einem der Ansprüche 10 bis 16, bei der die Basis (112) der Abschlußvorrichtung (110) eine einstückig mit dem Lichtdurchlaßbereich der Basis (112) ausgebildete Linse (122) aufweist.

18. Vorrichtung nach einem der vorhergehenden Ansprüche, soweit auf Anspruch 17 rückbezogen, bei der die Linse (122) auf dem Lichtdurchlaßbereich der Basis (112) der Abschlußvorrichtung (110) gegenüber der Faseranschlagfläche (118) ausgebildet ist.

19. Vorrichtung nach einem der Ansprüche 11 bis 18, bei der der Lichtdurchlaßbereich der Basis (112) der Abschlußvorrichtung (110) mehrere Flächen aufweist, die so positioniert sind, daß sie eine vollständige innere Reflexion eines auf die faseranschlagfläche (118) gerichteten Lichtstrahls bewirken.

20. Vorrichtung nach einem der Ansprüche 11 bis 19, bei der die Faseraufnahmenut (116) im wesentlichen gerade ist und die Faseranschlagfläche (118) im wesentlichen orthogonal zur Faseraufnahmenut (116) verläuft.

21. Vorrichtung nach einem der vorhergehenden Ansprüche soweit auf Anspruch 14 rückbezogen, bei der die Einsatzeinrichtung (220) ein optisches Plattenteil aufweist, das derart bemessen ist, daß es in einen entsprechenden Ausschnitt in der Basis (112) nahe des Lichtdurchlaßbereichs paßt.

22. Vorrichtung nach Anspruch 21, bei der die optische Platte eine einstückig mit dieser ausgebildete Linse (222) aufweist.

23. Vorrichtung nach Anspruch 21 oder 22, bei der die optische Platte mechanisch polarisiert ist (Erhebung 224), um nur auf eine Weise in den Ausschnitt der Basis (112) zu passen.

## Revendications

1. Une fixation de terminaison de fibre optique, comprenant :
◆ une base (112) incluant une partie transmettant la lumière,
◆ une saillie (114) attachée à ladite base (112) près de sa dite partie transmettant la lumière et faisant saillie à partir de là, ladite saillie (114) comportant une rainure (116) de réception de fibres dirigée vers une surface d'arrêt (118) de fibre, située sur ladite partie de transmission de lumière de ladite base (112), et
◆ un moyen d'alignement de ladite partie transmettant la lumière de ladite base (112) avec un dispositif optique,
caractérisé en ce que ledit moyen d'alignement comprend une série de montants (120) attachés au côté opposé de ladite base (112), et lesdits montants font saillie à partir de là pour permettre à la fixation de venir en prise avec une surface extérieure d'un dispositif optique ou d'un substrat qui porte un dispositif optique de façon à positionner la surface d'arrêt de fibre au-dessus du dispositif optique à une distance prédéterminée et à aligner ladite surface d'arrêt (118) de fibre avec le dispositif optique.

2. La fixation de terminaison selon la revendication 1 dans laquelle ladite base (112) inclut une lentille (122) qui est formée d'un seul tenant avec ladite partie transmettant la lumière de cette base.

3. La fixation de terminaison selon la revendication 1 ou 2 dans laquelle ladite partie transmettant la lumière de ladite base (112) comporte une série de surfaces positionnées pour réaliser une réflexion interne totale d'un faisceau lumineux dirigé vers ladite surface d'arrêt (118) de fibre.

4. La fixation de terminaison selon l'une quelconque des revendications 1 à 3 qui comprend en outre un moyen d'insert (220) pour modifier une caractéristique optique de la fixation.

5. La fixation de terminaison selon l'une quelconque des revendications 1 à 4 dans laquelle ladite rainure (116) de réception de fibre est généralement rectiligne et ladite surface d'arrêt (118) de fibre est généralement orthogonale à ladite rainure (116) de réception de fibre.

6. La fixation de terminaison selon l'une quelconque des revendications précédentes dans la mesure où elle dépend de la revendication 2, dans laquelle ladite lentille (122) est formée sur ladite partie transmettant la lumière de ladite base (112) qui est opposée à ladite surface d'arrêt (118) de fibre.

7. La fixation de terminaison selon la revendication 5 ou 6 dans la mesure où elle dépend de la revendication 4, dans laquelle ledit moyen d'insert (220) comprend un organe en forme de plaque optique dimensionné de manière à s'ajuster dans une découpe correspondante de ladite base (112) à proximité de ladite partie transmettant la lumière de celle-ci.

8. La fixation de terminaison selon la revendication 7 dans laquelle ladite plaque optique comporte une lentille (222) qui est formée d'un seul tenant avec elle.

9. La fixation de terminaison selon la revendication 7 ou 8 dans laquelle ladite plaque optique est polarisée mécaniquement (surépaisseur 224) pour ne s'ajuster que dans une direction dans ladite découpe de ladite base (112).

10. Un dispositif de terminaison d'une fibre optique comprenant :
◆ un boîtier (70) où est ménagée une ouverture (74) de réception de l'extrémité terminale d'une fibre optique (30 ; 32),
◆ au moins une fixation de terminaison (110) située dans ledit boîtier (70), ladite fixation (110) incluant une base (112) et une saillie (114) qui est attachée à ladite base (112) près de ladite partie transmettant la lumière et fait saillie à partir de là, ladite saillie (114) incluant une rainure (116) de réception de fibre dont une première extrémité est dirigée généralement vers ladite ouverture (74) dudit boîtier (70) et une seconde extrémité est dirigée vers une surface d'arrêt (118) de fibre située sur ladite partie transmettant la lumière de ladite base (112); et
◆ au moins un dispositif optique (210) logé dans ledit boîtier (70) et positionné par rapport à ladite fixation de terminaison (110) de façon à se connecter fonctionnellement avec ladite partie transmettant la lumière de ladite base (112);
◆ dans lequel ladite fixation de terminaison (110) comprend en outre un moyen d'alignement de ladite partie transmettant la lumière de ladite base avec ledit dispositif optique (210),
caractérisé en ce que ledit moyen d'alignement comprend une série de montants (120) attachés au côté opposé de ladite base (112) de ladite fixation de terminaison (110), et lesdits montants font saillie à partir de ladite base (112) pour permettre à la fixation de venir en prise avec une surface extérieure dudit dispositif optique (210) ou dudit boîtier (70) de façon à positionner la surface d'arrêt de fibre au-dessus du dispositif optique à une distance prédéterminée et à aligner ladite surface d'arrêt (118) de fibre avec le dispositif optique.

11. Le dispositif de la revendication 10 dans lequel :
◆ ledit dispositif optique (210) est monté sur un substrat (226) ;
◆ ladite fixation de terminaison (110) est montée sur ledit substrat (226); et
◆ ledit substrat (226) est attaché à une partie intérieure dudit boîtier (70).

12. Le dispositif selon la revendication 10 ou 11 dans lequel ledit boîtier (70) comporte une porte (90) située à ladite ouverture (74) rappelée vers une position fermée, ladite porte (90) comportant un moyen de verrou pour recevoir de façon démontable une fiche (12) de fibre optique.

13. Le dispositif selon l'une quelconque des revendications 10 à 12 dans lequel ledit boîtier (70) comporte au moins deux desdites fixations de terminaison (110) et au moins deux desdits dispositifs optiques (210) connectés fonctionnellement, respectivement, auxdites deux fixations de terminaison (110).

14. Le dispositif selon l'une quelconque des revendications 10 à 13 qui comprend en outre un moyen d'insert (220) pour modifier une caractéristique optique de ladite fixation de terminaison (110).

15. Le dispositif selon l'une quelconque des revendications précédentes dans la mesure où elle dépend de la revendication 11 dans lequel ledit boîtier (70) inclut une plaque amovible qui permet d'accéder à une partie intérieure dudit boîtier (70), ladite plaque comportant des bras de verrouillage qui s'attachent audit boîtier (70) et fixent ledit substrat (226) dans ledit boîtier (70).

16. Le dispositif selon l'une quelconque des revendications 10 à 15, dans lequel :
◆ lesdits deux dispositifs optiques (210) sont montés sur un substrat commun (226) ;
◆ lesdites deux fixations de terminaison (110) sont montées sur ledit substrat commun (226) ; et
◆ ledit substrat (226) est attaché à une partie intérieure dudit boîtier (70).

17. Le dispositif selon l'une quelconque des revendications 10 à 16 dans lequel ladite base (112) de ladite fixation de terminaison (110) inclut une lentille (122) qui est formée d'un seul tenant avec ladite partie transmettant la lumière de ladite base (112).

18. Le dispositif selon l'une quelconque des revendications précédentes dans la mesure où elle dépend de la revendication 17 dans lequel ladite lentille (122) est formée sur une partie transmettant la lumière de ladite base (112) de ladite fixation de terminaison (110) qui est opposée à ladite surface d'arrêt (118) de fibre.

19. Le dispositif selon l'une quelconque des revendications 11 à 18, dans lequel ladite partie transmettant la lumière de ladite base (112) de ladite fixation de terminaison (110) inclut une série de surfaces positionnées pour réaliser une réflexion interne totale d'un faisceau lumineux dirigé vers ladite surface d'arrêt (118) de fibre.

20. Le dispositif selon l'une quelconque des revendications 11 à 19 dans laquelle ladite rainure (116) de réception de fibre est généralement rectiligne et ladite surface d'arrêt (118) de fibre est généralement orthogonale à ladite rainure (116) de réception de fibre.

21. Le dispositif selon l'une quelconque des revendications précédentes dans la mesure où elle dépend de la revendication 14, dans laquelle ledit moyen d'insert (220) comprend un organe en forme de plaque optique dimensionné de manière à s'ajuster dans une découpe correspondante de ladite base (112) près de ladite partie transmettant la lumière de celle-ci.

22. Le dispositif selon la revendication 21 dans laquelle ladite plaque optique inclut une lentille (222) qui est formée d'un seul tenant avec elle .

23. Le dispositif selon la revendication 21 ou 22 dans laquelle ladite plaque optique est polarisée mécaniquement (surépaisseur 224) pour ne s'ajuster que dans une direction dans ladite découpe de ladite base (112).
